# EUROPEAN PATENT APPLICATION

(11) **EP 4 783 268 A1**
(43) Date of publication of application: **29.07.2026**
(21) Application number: 25209711.8
(22) Date of filing: 20.10.2025
(51) Int. Cl.: H01M 8/04089, H01M 8/0438, H01M 8/04746, H01M 8/249

(54) **FUEL CELL SYSTEM WITH OXYGEN BACKFLOW SUPPRESION MECHANISM**

(30) Priority: 23.01.2025 JP 2025009904
(71) Applicant: TOYOTA JIDOSHA KABUSHIKI KAISHA, Toyota-shi, Aichi-ken 471-8571 (JP)
(72) Inventor: ODA, Kohei, Toyota-shi, Aichi-ken 471-8571 (JP); YANO, Masaya, Toyota-shi, Aichi-ken 471-8571 (JP); SHIOKAWA, Satoshi, Toyota-shi, Aichi-ken 471-8571 (JP); ONOHARA, Shunsuke, Toyota-shi, Aichi-ken 471-8571 (JP); SONODA, Yoshihiro, Toyota-shi, Aichi-ken 471-8571 (JP); ARAI, Yoshikazu, Toyota-shi, Aichi-ken 471-8571 (JP)
(74) Representative: TBK

(57) **Abstract**

A fuel cell system includes first and second exhaust pipes respectively connected to first and second fuel cell stacks, a common exhaust pipe into which the first and second exhaust pipes merge, and a backflow suppression mechanism. The backflow suppression mechanism is configured to suppress backflow of oxygen from the first exhaust pipe into the second exhaust pipe. A typical example of the backflow suppression mechanism includes a compressor, a bypass pipe, pressure regulating valves respectively provided in the bypass pipe, an oxygen supply pipe, and the second exhaust pipe, and a controller. The controller is configured to control the compressor and the pressure regulating valves such that an amount of oxygen sufficient for the second fuel cell stack to achieve target output is supplied to the second fuel cell stack, and that oxygen does not flow backward from the first exhaust pipe into the second exhaust pipe.

## Description

### BACKGROUND OF THE INVENTION

### 1. Field of the Invention

The technology disclosed in the present specification relates to fuel cell systems that include a plurality of fuel cell stacks.

### 2. Description of Related Art

Fuel cell systems that include a plurality of fuel cell stacks are known in the art (for example, Japanese Unexamined Patent Application Publication Nos. 2023-102089 (JP 2023-102089 A) and 2023-102090 (JP 2023-102090 A), and WO 2017/010069). In JP 2023-102089 A and JP 2023-102090 A, each fuel cell stack is provided with an oxygen supply pipe for introducing oxygen (air) and an exhaust pipe for discharging excess oxygen. The exhaust pipes of the fuel cell stacks are connected to a single common exhaust pipe. In the following description, for convenience of explanation, the term "fuel cell" may be abbreviated as "FC." The term "fuel cell system" may be abbreviated as "FC system," and the term "fuel cell stack" may be abbreviated as "FC stack."

### SUMMARY OF THE INVENTION

When the outputs of the FC stacks differ, the amount of oxygen to be supplied to each FC stack also differs. The amount of oxygen supplied to each FC stack is adjusted by a compressor and a pressure regulating valve provided in its corresponding oxygen supply pipe. If the output of each compressor is simply determined based on the oxygen demand of its corresponding FC stack, the gas pressures of the excess oxygen discharged from the FC stacks will differ from one another, depending on their respective oxygen demands. If the gas pressures of the excess oxygen discharged from the FC stacks differ, oxygen may flow backward into the FC stack with the lower gas pressure, since the exhaust pipes of the FC stacks are connected via the common exhaust pipe. The present specification provides a technology for suppressing backflow of oxygen in an FC system in which exhaust pipes of a plurality of FC stacks are connected to each other.

An FC system disclosed in the present specification includes a first FC stack, a second FC stack, a first exhaust pipe, a second exhaust pipe, a common exhaust pipe into which the first exhaust pipe and the second exhaust pipe merge, and a backflow suppression mechanism. The backflow suppression mechanism is configured to suppress backflow of oxygen from the first exhaust pipe into the second exhaust pipe. A typical example of the backflow suppression mechanism includes a compressor, a bypass pipe, an intake pressure regulating valve provided in an oxygen supply pipe, an exhaust pressure regulating valve provided in the second exhaust pipe, a bypass pressure regulating valve provided in the bypass pipe, and a controller. The compressor is configured to deliver oxygen to the second FC stack through the oxygen supply pipe. The bypass pipe is configured to guide part of oxygen discharged from the compressor to the second exhaust pipe while bypassing the second FC stack. The intake pressure regulating valve is configured to regulate the pressure of oxygen supplied to the second FC stack. The exhaust pressure regulating valve is configured to regulate the pressure of oxygen discharged from the second FC stack. The bypass pressure regulating valve is configured to regulate the outlet pressure of the bypass pipe. The controller is configured to control the compressor, the intake pressure regulating valve, the exhaust pressure regulating valve, and the bypass pressure regulating valve such that an amount of oxygen sufficient for the second FC stack to achieve target output is supplied to the second FC stack, and that oxygen does not flow backward from the first exhaust pipe into the second exhaust pipe. This control makes it possible to suppress oxygen backflow while operating the second FC stack. As used herein, the term "oxygen" may refer to a gas containing oxygen, and may typically be air.

The controller may be configured to control the compressor, the intake pressure regulating valve, the exhaust pressure regulating valve, and the bypass pressure regulating valve such that an amount of oxygen sufficient to keep the second FC stack in an idle state is supplied to the second FC stack, and that oxygen does not flow backward from the first exhaust pipe into the second exhaust pipe. The idle state refers to a state in which the output of the FC stack is minimized while the output voltage of the FC stack is controlled within a predetermined voltage range and a predetermined amount of oxygen is supplied to the FC stack. The minimum output depends on the physical and electrical characteristics of the FC stack.

Details of the technology disclosed in the present specification and further improvements thereof will be described in the "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram of an FC system according to a first embodiment;
FIG. 2 is a flowchart illustrating a backflow suppression process;
FIG. 3 is a flowchart illustrating a backflow suppression process (modification); and
FIG. 4 is a block diagram of an FC system according to a second embodiment.

### DETAILED DESCRIPTION OF EMBODIMENTS

### First Embodiment

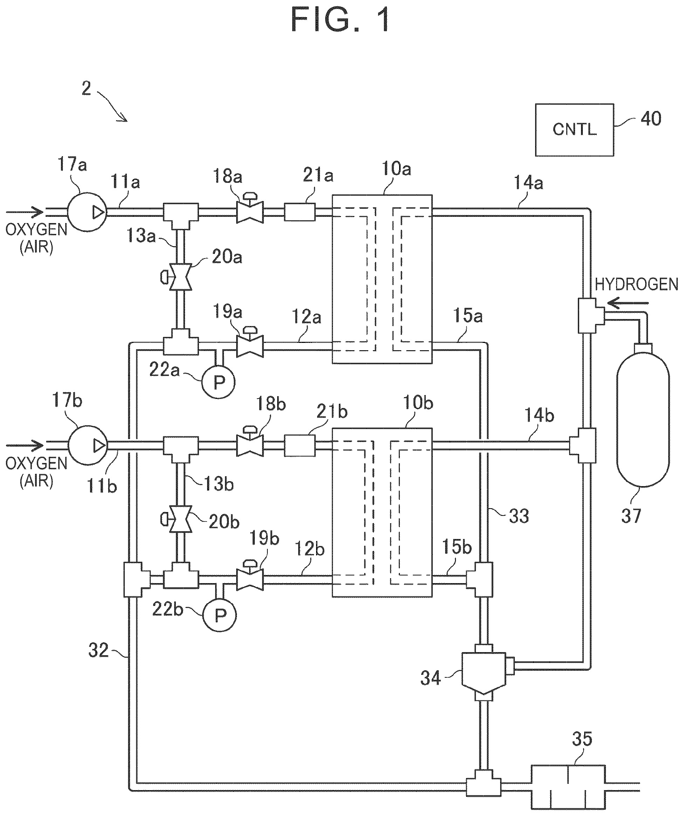

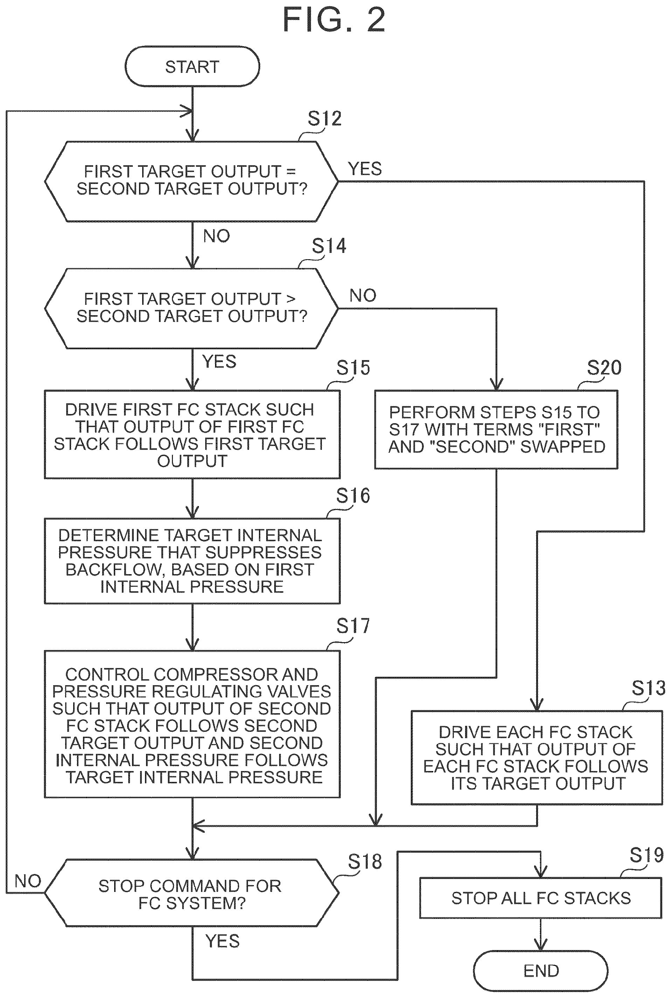

An FC system 2 according to a first embodiment will be described with reference to FIGS. 1 and 2. As mentioned earlier, "FC" is an abbreviation for "fuel cell."

FIG. 1 is a block diagram of the FC system 2. The FC system 2 includes two FC stacks 10a, 10b. Although not shown in the drawings, voltage converters are each connected to the output terminal of a corresponding one of the two FC stacks 10a, 10b, and the output terminals of the two voltage converters are connected to the output terminal of the FC system 2. That is, the outputs of the two FC stacks 10a, 10b are combined and output from the FC system 2.

An oxygen supply pipe 11a, an exhaust pipe 12a, a hydrogen supply pipe 14a, and an exhaust gas pipe 15a are connected to the first FC stack 10a. The oxygen supply pipe 11a supplies oxygen (outside air) to the cathode of the first FC stack 10a. A compressor 17a, an intake pressure regulating valve 18a, and a flow meter 21a are connected to the oxygen supply pipe 11a. The hydrogen supply pipe 14a connects a hydrogen tank 37 to the anode of the first FC stack 10a and supplies hydrogen gas from the hydrogen tank 37 to the anode of the first FC stack 10a. Although a pressure regulating valve, a pressure sensor, and an injector are provided in the hydrogen supply pipe 14a, these are not shown in the drawings. As is well known in the art, hydrogen supplied to the anode of the first FC stack 10a reacts with oxygen supplied to the cathode thereof to generate electricity and water. The electricity is sent to the voltage converter mentioned above. The water is discharged through the exhaust gas pipe 15a together with post-reaction gas. Excess oxygen (air) unused in the reaction with hydrogen is discharged through the exhaust pipe 12a. An exhaust pressure regulating valve 19a is provided in the exhaust pipe 12a. In the following description, "oxygen" refers to either pure oxygen gas or oxygen-containing gas (typically air).

The oxygen supply pipe 11a and the exhaust pipe 12a are connected via a bypass pipe 13a. The bypass pipe 13a delivers oxygen (air) compressed by the compressor 17a to the exhaust pipe 12a while bypassing the first FC stack 10a. One end of the bypass pipe 13a is connected to the oxygen supply pipe 11a between the compressor 17a and the intake pressure regulating valve 18a. The other end of the bypass pipe 13a is connected to the exhaust pipe 12a between the exhaust pressure regulating valve 19a and a common exhaust pipe 32.

A bypass pressure regulating valve 20a is provided in the bypass pipe 13a. The pressure regulating valves 18a, 19a, 20a are valves that adjust the pressure on the secondary side (i.e., downstream of the valve) to a desired level, and are also referred to as pressure-reducing valves. However, the pressure on the secondary side cannot exceed the pressure on the primary side (i.e., upstream of the valve). The pressure regulating valves 18a, 19a, 20a can also be fully closed. That is, the pressure regulating valves 18a, 19a, 20a can shut off flow between the primary side and the secondary side.

A controller 40 determines the amounts of oxygen and hydrogen to be supplied to the first FC stack 10a based on the target output of the first FC stack 10a. The amount of hydrogen supplied to the first FC stack 10a is adjusted by the pressure regulating valve and the injector (not shown) provided in the hydrogen supply pipe 14a. The amount of oxygen supplied to the first FC stack 10a is adjusted by the compressor 17a and the pressure regulating valves 18a, 19a, 20a. The amount of oxygen supplied to the first FC stack 10a is measured by the flow meter 21a. The controller 40 controls the compressor 17a and the pressure regulating valves 18a, 19a, 20a based on the measurement result from the flow meter 21a so as to supply an appropriate amount of oxygen to the oxygen inlet of the first FC stack 10a.

A pressure sensor 22a that measures the internal pressure of the exhaust pipe 12a is provided in the exhaust pipe 12a. The pressure sensor 22a is attached to the exhaust pipe 12a downstream of the exhaust pressure regulating valve 19a. The first FC stack 10a is also equipped with several other pressure sensors and valves, but these are not shown in the drawings.

The second FC stack 10b is also provided with devices similar to those of the first FC stack 10a. The same description applies to the second FC stack 10b, with the letter "a" in each reference numeral in the foregoing description of the first FC stack 10a replaced by "b."

The exhaust pipes 12a, 12b are connected to the common exhaust pipe 32. The exhaust gas pipes 15a, 15b are connected to a common exhaust gas pipe 33. The common exhaust gas pipe 33 is connected to a gas-liquid separator 34. The gas-liquid separator 34 separates the exhaust gases from the FC stacks 10a, 10b into residual hydrogen unused in the reaction and water generated by the reaction. The residual hydrogen is returned to the hydrogen supply pipes 14a, 14b. The water is sent to a muffler 35. The common exhaust pipe 32 is also connected to the muffler 35. Residual oxygen discharged from the FC stacks 10a, 10b is sent to the muffler 35 via the exhaust pipes 12a, 12b and the common exhaust pipe 32, and is discharged to the outside together with the water. By merging the multiple exhaust pipes 12a, 12b into the single common exhaust pipe 32 and attaching the muffler 35 to the common exhaust pipe 32, the cost of the FC system can be reduced and the installation space for the FC system can be saved.

To merge the outlets for residual oxygen and water into one, the exhaust pipes 12a, 12b are connected to the single common exhaust pipe 32. Meanwhile, the amount of oxygen supplied to the FC stack 10a (10b) is adjusted by the compressor 17a (17b) and the intake pressure regulating valve 18a (18b) provided in the oxygen supply pipe 11a (11b) and the pressure regulating valves 19a, 20a (19b, 20b). If the output of the compressor 17a (17b) is simply determined based on the oxygen demand of its corresponding FC stack, the gas pressures of the excess oxygen discharged from the FC stacks 10a, 10b will differ from each other, depending on their respective oxygen demands. If the gas pressures of the excess oxygen discharged from the FC stacks 10a, 10b differ, oxygen may flow backward into the FC stack with the lower gas pressure, since the exhaust pipes 12a, 12b are connected via the common exhaust pipe 32. In particular, if the internal pressure of the exhaust pipe of one FC stack is high and the internal pressure of the exhaust pipe of the other FC stack is close to atmospheric pressure, there is a risk that part of the residual oxygen discharged from the exhaust pipe of the one FC stack may flow backward into the exhaust pipe of the other FC stack. The FC system 2 is provided with a mechanism for suppressing the backflow of residual oxygen.

FIG. 2 shows a flowchart of a backflow suppression process performed by the controller 40. The controller 40 receives a command indicating an output requested from the FC system 2 (i.e., a requested output) from an upper-level controller (not shown). The controller 40 divides the requested output into individual target outputs for the first FC stack 10a and the second FC stack 10b. Various formulas may be used to divide the requested output into the two target outputs. When the requested output can be handled by a single FC stack, one of the FC stacks may be stopped or placed in an idle state (described later). Details on the case in which the requested output can be handled by a single FC stack will be provided below. The flowchart in FIG. 2 illustrates a process performed when target outputs are assigned to both FC stacks. Hereinafter, the target output for the first FC stack 10a is referred to as first target output, and the target output for the second FC stack 10b is referred to as second target output.

The controller 40 compares the two target outputs (step S12). When the first target output is equal to the second target output (step S12: YES), the controller 40 drives each FC stack such that the output of each FC stack follows its target output (step S13). In step S13, the controller 40 calculates the amounts of oxygen (target oxygen amount) and hydrogen (target hydrogen amount) to be supplied to each FC stack such that the output of each FC stuck follows its target output. The controller 40 controls the compressor 17a and the pressure regulating valves 18a, 19a, 20a so as to supply the target oxygen amount to the first FC stack 10a. The controller 40 also controls the pressure regulating valve and the injector provided in the hydrogen supply pipe 14a so as to supply the target hydrogen amount to the first FC stack 10a. The controller 40 performs the same control for the second FC stack 10b. In this case, the bypass pressure regulating valves 20a, 20b may be closed.

Since the target outputs of the two FC stacks are equal, their exhaust pressures are also equal. Therefore, in this case, no special processing is performed to suppress backflow. Due to individual differences between the FC stacks, their exhaust pressures may slightly differ even if their target outputs are the same. However, such small differences in exhaust pressure do not result in backflow.

When the first target output is greater than the second target output (step S12: NO, step S14: YES), the controller 40 drives the first FC stack 10a such that the output of the first FC stack 10a follows the first target output (step S15). In step S15, as in step S13, the controller 40 controls the compressor 17a, the pressure regulating valves 18a, 19a, 20a, and the injector and the pressure regulating valve provided in the hydrogen supply pipe 14a, so as to achieve the first target output. In this case, the controller 40 closes the bypass pressure regulating valve 20a.

Next, the controller 40 calculates a target value of the internal pressure (target internal pressure) of the exhaust pipe 12b, namely a pressure value that suppresses backflow into the exhaust pipe 12b, based on the internal pressure of the exhaust pipe 12a. In FIG. 2, the internal pressure of the exhaust pipe 12a is denoted as the first internal pressure, and the internal pressure of the exhaust pipe 12b is denoted as the second internal pressure. As described earlier, the first internal pressure is measured by the pressure sensor 22a provided downstream of the exhaust pressure regulating valve 19a, and the second internal pressure is measured by the pressure sensor 22b provided downstream of the exhaust pressure regulating valve 19b.

When the first internal pressure and the second internal pressure are approximately equal, the residual oxygen in the exhaust pipe 12a and the residual oxygen in the exhaust pipe 12b are discharged to the outside via the common exhaust pipe 32 and the muffler 35. When the first internal pressure is significantly higher than the second internal pressure, part of the residual oxygen in the exhaust pipe 12a may flow backward into the exhaust pipe 12b. Alternatively, when the second target output is low and the second internal pressure is close to atmospheric pressure, part of the residual oxygen in the exhaust pipe 12a may flow backward into the exhaust pipe 12b. Whether backflow occurs depends on the flow path resistance of the common exhaust pipe 32 including the muffler 35 and the first internal pressure. The target internal pressure that suppresses backflow is calculated using a relational expression (or a map) in which the first internal pressure is a variable. The flow path resistance can be identified in advance. The relational expression (or the map) is determined in advance and implemented in the controller 40. The controller 40 refers to the relational expression (or the map) and calculates the target internal pressure based on the first internal pressure (step S16).

The controller 40 controls the compressor 17b and the pressure regulating valves 18b, 19b, 20b (and the injector and the pressure regulating valve provided in the hydrogen supply pipe 14b) such that the output of the second FC stack 10b follows the second target output and the second internal pressure follows the target internal pressure (step S17). The second target output determines the amount of oxygen (target oxygen amount) to be supplied to the second FC stack 10b. The controller 40 controls the compressor 17b, the intake pressure regulating valve 18b, and the exhaust pressure regulating valve 19b so as to supply the target oxygen amount to the second FC stack 10b. At the same time, the controller 40 controls the compressor 17b and the bypass pressure regulating valve 20b such that the second internal pressure follows the target internal pressure. Specifically, when the second internal pressure is lower than the target internal pressure, the controller 40 increases the output of the compressor 17b and readjusts the pressure regulating valves 18b, 19b, 20b.

When the second internal pressure is equal to the first internal pressure, oxygen backflow is unlikely to occur. Therefore, instead of performing steps S16, S17, the controller 40 may alternatively control the compressor 17b and the pressure regulating valves 18b, 19b, 20b such that the output of the second FC stack 10b follows the second target output and the second internal pressure becomes equal to the first internal pressure. The processing of steps S16, S17 or this alternative processing suppresses the backflow of oxygen from the exhaust pipe 12a into the exhaust pipe 12b.

When the first target output is smaller than the second target output (NO in step S12, NO in step S14), the process of the controller 40 proceeds to step S20. The controller 40 performs steps S15, S16, S17 with the terms "first" and "second" in the above description of the process of FIG. 2 swapped (step S20). The controller 40 repeats the above processing until it receives a stop command for the FC system 2 from a higher-level controller (step S18: NO, S12). Upon receiving a stop command for the FC system 2 from the higher-level controller, the controller 40 stops the operation of all of the FC stacks and ends the process (step S18: YES, S19).

Through the above process, the FC system 2 can suppress backflow of oxygen in the exhaust pipes even when the outputs of the two FC stacks 10a, 10b are different.

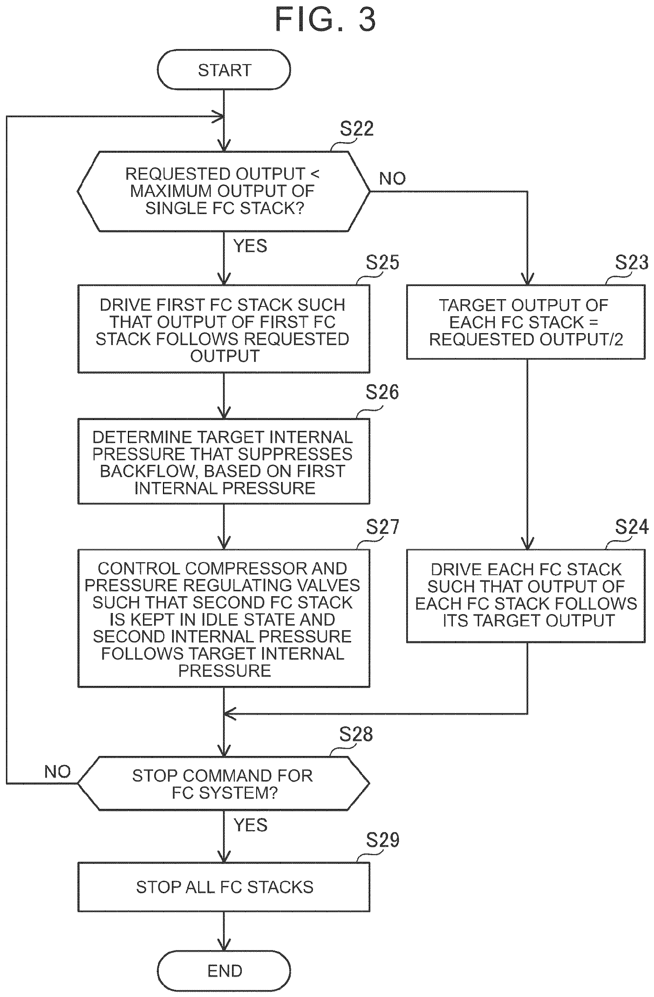

FIG. 3 illustrates another example (modification) of the backflow suppression process. When the requested output from the higher-level controller exceeds the maximum output of a single FC stack, the controller 40 sets the target output of each of the two FC stacks 10a, 10b to half of the requested output (step S22: NO, S23). The controller 40 then drives each FC stack such that the output of each FC stack follows its target output (step S24). The processing of step S24 is the same as that of step S13 in FIG. 2. Since the target outputs of the two FC stacks are equal, their exhaust pressures are also equal. Therefore, in this case, no special processing is performed to suppress backflow.

When the requested output is smaller than the maximum output of a single FC stack, the controller 40 drives the first FC stack 10a such that the output of the first FC stack 10a follows the requested output (step S22: YES, S25). The processing of step S25 is the same as that of step S15.

Subsequently, the controller 40 calculates a target value of the second internal pressure (target internal pressure), namely a pressure value that suppresses backflow into the exhaust pipe 12b, based on the first internal pressure (step S26). The processing of step S26 is the same as that of step S16. The controller 40 then controls the compressor 17b and the pressure regulating valves 18b, 19b, 20b such that the second FC stack 10b is kept in an idle state and the second internal pressure follows the target internal pressure (step S27). The specific control of the compressor 17b and the pressure regulating valves 18b, 19b, 20b in step S27 is the same as in step S17.

The idle state is a state in which the output of the FC stack is minimized while the voltage of the FC stack is maintained within a predetermined idle voltage range. In the idle state, the reaction between oxygen and hydrogen continues inside the FC stack, while the output of the FC stack is kept to a minimum. As described above, a voltage converter is connected to the output terminal of the FC stack. The output of the FC stack is controlled by adjusting the voltage conversion ratio of the voltage converter. By lowering the output voltage of the voltage converter while in the idle state, the output current from the FC stack can also be made substantially zero. The magnitude of the minimum output is determined depending on the physical and electrical structure of the FC stack.

By keeping the FC stack in the idle state instead of completely shutting it down, degradation of the FC stack can be suppressed. Moreover, keeping the FC stack in the idle state allows the output current of the FC stack to be increased rapidly. Once the FC stack is shut down, it takes a certain startup time from the restart of the FC stack until output current becomes available. In other words, the idle state is a standby state of the FC stack in preparation for a future increase in requested output.

In the idle state, the second FC stack 10b operates with a small amount of oxygen. If the bypass pressure regulating valve 20b is closed in this state, the second internal pressure becomes close to atmospheric pressure, which increases the likelihood of oxygen backflow. Therefore, the controller 40 increases the output of the compressor 17b and opens the bypass pressure control valve 20b wider to raise the second internal pressure and thereby suppress oxygen backflow.

The controller 40 repeats the above processing until it receives a stop command for the FC system 2 from the higher-level controller (step S28: NO, S22). Upon receiving a stop command for the FC system 2 from the higher-level controller, the controller 40 stops all of the FC stacks and ends the process (step S28: YES, S29). Through the process shown in FIG. 3, the FC system 2 can suppress backflow of oxygen from the exhaust pipe 12a into the exhaust pipe 12b while keeping the second FC stack 10b in the idle state. The terms "first" and "second" in the flowchart of FIG. 3 may be swapped.

### Second Embodiment

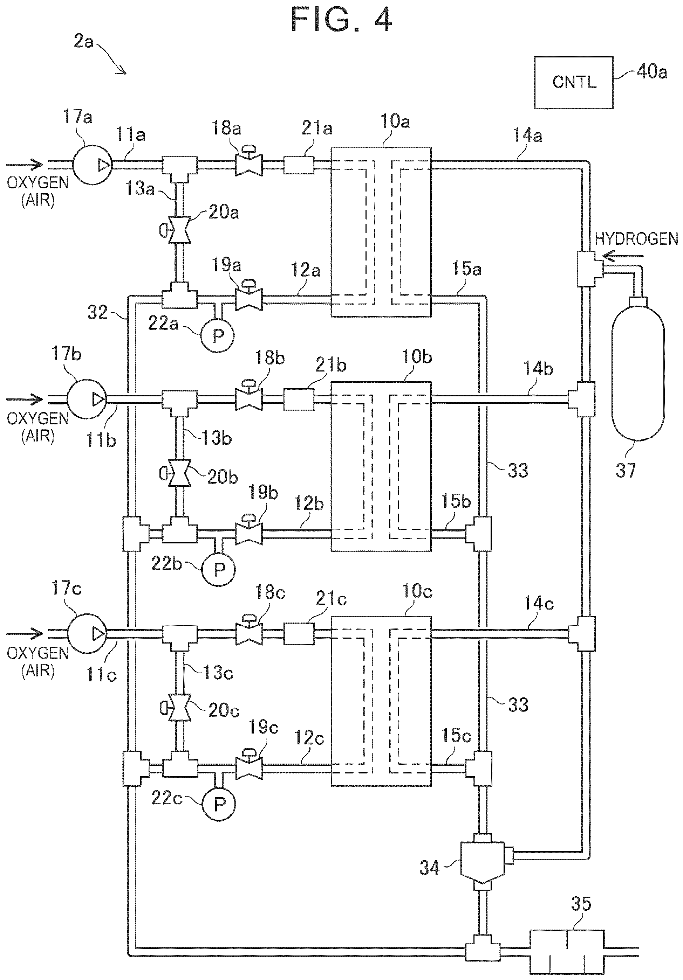

An FC system 2a according to a second embodiment will be described with reference to FIG. 4. FIG. 4 is a block diagram of the FC system 2a. The FC system 2a is the FC system 2 of the first embodiment with the addition of a third FC stack 10c and its associated devices. Specifically, the third FC stack 10c is provided with an oxygen supply pipe 11c, an exhaust pipe 12c, a hydrogen supply pipe 14c, an exhaust gas pipe 15c, a bypass pipe 13c, a compressor 17c, pressure regulating valves 18c, 19c, 20c, and a pressure sensor 22c. These devices have the same structures and functions as those of the oxygen supply pipe 11a, exhaust pipe 12a, hydrogen supply pipe 14a, exhaust gas pipe 15a, bypass pipe 13a, compressor 17a, pressure regulating valves 18a, 19a, 20a, and pressure sensor 22a in the FC system 2 of the first embodiment.

When the power requested from the FC system 2a is less than the maximum output of a single FC stack, the controller 40a performs the following processes as a backflow suppression process. (1) The controller 40a drives the first FC stack 10a such that the output of the first FC stack 10a follows the requested output. This processing is the same as that of step S25 in FIG. 3. (2) The controller 40a stops the third FC stack 10c. Specifically, the controller 40a closes the pressure regulating valves 18c, 19c, 20c of the third FC stack 10c. As described earlier, the pressure regulating valves 18a, 19a, 20a (18b, 19b, 20b, 18c, 19c, 20c) can not only adjust the pressure on the secondary side (i.e., downstream of the valve) but also shut off flow between the primary side (i.e., upstream of the valve) and the secondary side (i.e., downstream of the valve). As neither oxygen nor hydrogen is supplied to the third FC stack 10c, the third FC stack 10c is completely shut down. Since the exhaust pressure regulating valve 19c and the bypass pressure regulating valve 20c are closed, oxygen is unlikely to flow backward into the exhaust pipe 12c.

(3) The controller 40a determines a target internal pressure for the exhaust pipe 12b, namely a pressure value that suppresses backflow of oxygen from the exhaust pipe 12a into the exhaust pipe 12b, based on the internal pressure of the exhaust pipe 12a (first internal pressure). The controller 40a then controls the compressor 17b and the pressure regulating valves 18b, 19b, 20b such that the second FC stack 10b is kept in the idle state and the second internal pressure follows the target internal pressure. These processes are the same as the processing of steps S26, S27 in FIG. 3. The controller 40a repeats the processes (1), (2), (3) until it receives a system stop command. The processes (1), (2), (3) are collectively referred to as first standby mode.

After the first standby mode has continued for a predetermined period of time, the controller 40a performs the following processes (4), (5) in place of the processes (2), (3). (4) The controller 40a stops the second FC stack 10b. Specifically, the controller 40a closes the pressure regulating valves 18b, 19b, 20b of the second FC stack 10b. (5) The controller 40a determines a target internal pressure for the exhaust pipe 12c, that is, a pressure value that suppresses backflow of oxygen from the exhaust pipe 12a into the exhaust pipe 12c, based on the internal pressure of the exhaust pipe 12a (first internal pressure). In addition, the controller 40a controls the compressor 17c and the pressure regulating valves 18c, 19c, 20c such that the third FC stack 10c is kept in the idle state and the internal pressure of the exhaust pipe 12c (third internal pressure) follows the target internal pressure. The controller 40a repeats the processes (1), (4), (5) until it receives a system stop command. The processes (1), (4), (5) are collectively referred to as second standby mode. The controller 40a alternates between the first standby mode and the second standby mode at predetermined time intervals. This processing suppresses not only suppresses oxygen backflow but also degradation of the second FC stack 10b and the third FC stack 10c. Furthermore, this processing enables a prompt response even when the requested power exceeds the maximum output of a single FC stack.

Instead of alternately switching between the first standby mode and the second standby mode at fixed time intervals, the controller 40a may switch between the first standby mode and the second standby mode according to the dryness state of each FC stack.

As described above, the FC systems 2, 2a according to the embodiments can suppress oxygen backflow in the exhaust pipes of the FC stacks, even when the outputs of the plurality of FC stacks differ.

The features of the FC system 2 are summarized as follows. The FC system 2 includes: the first FC stack 10a; the second FC stack 10b; the first exhaust pipe (exhaust pipe 12a) connected to the first FC stack 10a and configured to discharge oxygen unused in the reaction; the second exhaust pipe (exhaust pipe 12b) connected to the second FC stack 10b and configured to discharge oxygen unused in the reaction; the common exhaust pipe 32 into which the first and second exhaust pipes merge; and the backflow suppression mechanism configured to suppress backflow of oxygen from the first exhaust pipe into the second exhaust pipe (FIG. 1). One specific configuration of the backflow suppression mechanism includes the bypass pipe 13b, the compressor 17b, the intake pressure regulating valve 18b, the exhaust pressure regulating valve 19b, the bypass pressure regulating valve 20b, and the controller 40 (FIG. 1). The compressor 17b is provided in the oxygen supply pipe 11b configured to supply oxygen to the second FC stack 10b, and delivers oxygen (air) under pressure to the second FC stack 10b. The intake pressure regulating valve 18b is provided in the oxygen supply pipe 11b and regulates the pressure of the oxygen supplied to the second FC stack 10b. The exhaust pressure regulating valve 19b is provided in the second exhaust pipe and regulates the pressure of the oxygen discharged from the second FC stack 10b. The bypass pipe 13b guides the oxygen discharged from the compressor 17b to the second exhaust pipe (exhaust pipe 12b) while bypassing the second FC stack 10b. The bypass pressure regulating valve 20b regulates the outlet pressure of the bypass pipe 13b. The controller 40 controls the compressor 17b, the intake pressure regulating valve 18b, the exhaust pressure regulating valve 19b, and the bypass pressure regulating valve 20b such that an amount of oxygen (oxygen flow rate) sufficient for the second FC stack 10b to achieve the target output is supplied to the second FC stack 10b, and that oxygen does not flow backward from the first exhaust pipe into the second exhaust pipe.

The controller 40 may control the compressor 17b, the intake pressure regulating valve 18b, the exhaust pressure regulating valve 19b, and the bypass pressure regulating valve 20b such that an amount of oxygen (oxygen flow rate) sufficient to keep the second FC stack 10b in the idle state is supplied to the second FC stack 10b, and that oxygen does not flow backward from the first exhaust pipe (exhaust pipe 12a) into the second exhaust pipe (exhaust pipe 12b).

The FC system 2a of the second embodiment includes, in addition to the FC system 2, the third FC stack 10c provided with the third exhaust pipe (exhaust pipe 12c) connected to the common exhaust pipe 32, and another backflow suppression mechanism including the same components as the backflow suppression mechanism of the first embodiment and configured to suppress backflow of oxygen from the first exhaust pipe (exhaust pipe 12a) into the third exhaust pipe (exhaust pipe 12c) (FIG. 4). The controller 40a of the FC system 2a alternates between the first and second standby modes described above.

In the FC system 2a, the FC stack operated to achieve the requested output may be switched sequentially, and the other two FC stacks may alternate between the first and second standby modes.

Although specific examples of the present invention have been described in detail above, these are merely illustrative and are not intended to limit the scope of the claims. The technology described in the claims includes various modifications and alterations of the examples illustrated above. The technical elements described in the present specification or illustrated in the drawings exhibit technical utility alone or in various combinations, and are not limited to the combinations described in the claims as filed. In addition, the technology illustrated in the present specification or the drawings may simultaneously achieve a plurality of objects, and the achievement of any one of the objects alone provides technical utility.

## Claims

1. A fuel cell system comprising:
a first fuel cell stack and a second fuel cell stack;
a first exhaust pipe connected to the first fuel cell stack, the first exhaust pipe being configured to discharge oxygen unused in a reaction;
a second exhaust pipe connected to the second fuel cell stack, the second exhaust pipe being configured to discharge oxygen unused in a reaction;
a common exhaust pipe into which the first exhaust pipe and the second exhaust pipe merge; and
a backflow suppression mechanism configured to suppress backflow of oxygen from the first exhaust pipe into the second exhaust pipe.

2. The fuel cell system according to claim 1, wherein the backflow suppression mechanism includes
a compressor provided in an oxygen supply pipe configured to deliver oxygen to the second fuel cell stack,
a bypass pipe configured to guide oxygen discharged from the compressor to the second exhaust pipe while bypassing the second fuel cell stack,
an intake pressure regulating valve provided in the oxygen supply pipe, the intake pressure regulating valve being configured to regulate a pressure of oxygen supplied to the second fuel cell stack,
an exhaust pressure regulating valve provided in the second exhaust pipe, the exhaust pressure regulating valve being configured to regulate a pressure of oxygen discharged from the second fuel cell stack,
a bypass pressure regulating valve provided in the bypass pipe, the bypass pressure regulating valve being configured to regulate an outlet pressure of the bypass pipe, and
a controller configured to control the compressor, the intake pressure regulating valve, the exhaust pressure regulating valve, and the bypass pressure regulating valve such that an amount of oxygen sufficient for the second fuel cell stack to achieve target output is supplied to the second fuel cell stack, and that oxygen does not flow backward from the first exhaust pipe into the second exhaust pipe.

3. The fuel cell system according to claim 2, wherein the controller is configured to control the compressor, the intake pressure regulating valve, the exhaust pressure regulating valve, and the bypass pressure regulating valve such that an amount of oxygen sufficient to keep the second fuel cell stack in an idle state is supplied to the second fuel cell stack, and that oxygen does not flow backward from the first exhaust pipe into the second exhaust pipe.

4. The fuel cell system according to claim 3, wherein the idle state is a state in which output of the second fuel cell stack is minimized while a voltage of the second fuel cell stack is maintained within a predetermined idle voltage range.

5. The fuel cell system according to claim 4, further comprising:
a third fuel cell stack including a third exhaust pipe connected to the common exhaust pipe; and
another backflow suppression mechanism including the same components as the backflow suppression mechanism and configured to suppress backflow of oxygen from the first exhaust pipe into the third exhaust pipe,
wherein the controller is configured to alternate between
a first standby mode in which the third fuel cell stack is stopped, and the backflow suppression mechanism is controlled such that the amount of oxygen sufficient to keep the second fuel cell stack in the idle state is supplied to the second fuel cell stack, and that oxygen does not flow backward from the first exhaust pipe into the second exhaust pipe, and
a second standby mode in which the second fuel cell stack is stopped, and the another backflow suppression mechanism is controlled such that an amount of oxygen sufficient to keep the third fuel cell stack in the idle state is supplied to the third fuel cell stack, and that oxygen does not flow backward from the first exhaust pipe into the third exhaust pipe.
